# EUROPEAN PATENT SPECIFICATION

(11) **EP 3 683 608 B1**
(45) Date of publication and mention of the grant of the patent: **26.03.2025**
(21) Application number: 19152655.7
(22) Date of filing: 18.01.2019
(51) Int. Cl.: G02B 6/44, G02B 6/02

(54) **OPTICAL CABLE**
OPTISCHES KABEL
CÂBLE OPTIQUE

(43) Date of publication of application: 22.07.2020
(73) Proprietor: TE Connectivity Germany GmbH, 64625 Bensheim (DE)
(72) Inventor: DITTMANN, Markus, 75177 Pforzheim (DE)
(74) Representative: Grünecker Patent- und Rechtsanwälte PartG mbB

(56) References cited:
- GB-A- 2 136 239
- JP-A- 2001 166 172
- US-A- 5 627 934
- US-A1- 2009 238 233
- US-B1- 6 553 166

## Description

The invention relates to an optical cable comprising a core section, with at least one optical fiber extending in a cable direction forming a first channel for transmitting signal and/or data, wherein the core section is surrounded by at least one optical fiber layer forming a second channel for transmitting signal and/or data, the core section and the at least one optical fiber layer being arranged coaxially with one another, wherein a cladding is provided between a fiber core of the at least one optical fiber and the at least one optical fiber layer. Furthermore, the invention relates to a process for manufacturing an optical cable.

Optical cables have the advantage over conventional copper cables that a higher signal and/or data transmission rate can be achieved. Hence, in particular with the emergence of ultra high definition visual systems, optical cables are heavily relied upon. For transmitting different data, for example input and output data of an interactive display, a cable may be provided with more optical fibers arranged parallel to one another in the core section. Thus, a connection port for each optical fiber needs to be provided, increasing the space requirements of the cable system.

In US 2009/0238233 A1 optical die structures and associated package substrates are generally described. In one example, an electronic device includes a package substrate having a package substrate core, a dielectric layer coupled with the package substrate core, and one or more input/output (I/O) optical fibers coupled with the package substrate core or coupled with the build-up dielectric layer.

In GB 2 136 239 A the wide bandwidth channel to a subscriber of an optical fiber cable TV system, and the narrow bandwidth return channel from the subscriber are wavelength division multiplexed over a single fiber.

US 5,627,934 deals with a concentric core optical fiber that provides for the simultaneous but independent transmission of signals over a single optical fiber. The concentric optical fiber is constructed of a single mode or multimode inner optical fiber defined by a core and an outer optical fiber defined by an additional cladding.

A further concentric optical cable and connector capable of full duplex transmission of optically encoded information is disclosed in US 6,553,166 B1.

JP 2001 166172 A discloses a low-speed and high-speed interchangeable optical fiber which allows the transmission of both a low-speed signal and a high-speed signal by using the same optical transmitter. The optical fiber includes a first core, first clad, third clad, second core and second clad successively from the central part toward the outer peripheral part.

Therefore, it is the object of the invention to provide an easier to maintain optical cable with low space requirements.

This object is solved by the subject matter of the independent claims. Preferred embodiments are defined in the dependent claims.

By the inventive solution an optical cable is provided that comprises two channels, wherein the second channel surrounds the first channel. Therefore, reducing the space requirements of the optical cable and consequently the cable system. A single connection port may be provided for the connection of the inventive optical cable instead of having a separate connection port for each channel. Furthermore, each channel can be optimized for their respective tasks and thus over-engineering of the optical cable can be prevented. Hence, the inventive optical cable provides a compact and cost efficient design.

The invention can be improved further by the following features, which are independent from one another, with respect to their respective technical effects and which can be combined arbitrarily.

For example according to a first advantageous embodiment, the first channel may form a forward channel having a first forward signal and/or data bandwidth moving in the cable direction. The second channel may form a backward channel, having a second backward signal and/or data bandwidth moving opposite to the forward channel. Hence, a bidirectional optical cable is provided for transmitting signal and/or data input and output between two units, such as a processing unit and an output unit.

The core section is radially surrounded by the at least one optical fiber layer, so that a symmetrical coaxially arranged optical cable can be provided, facilitating the connection to complementary connection parts of the units.

The core section comprises at least one glass optical fiber. With a glass optical fiber a high-speed signal and/or data transmission can be achieved. The core section may preferably comprise a bundle of glass optical fibers.

A cladding is arranged between a fiber core of the at least one optical fiber in the core section and the at least one optical fiber layer. The cladding may comprise at least one layer of a lower refractive index in comparison to the fiber core material in the core section and/or the optical fiber layer. The cladding may improve transmission of the fiber and prevent any interference between the core section and the optical fiber layer.

The optical fiber layer comprises a polymer optical fiber material, such as acrylic glass and/or Polystyrene. The polymer optical fiber is characterized by its low price and high robustness under bending and stretching.

The diameter of the optical fiber layer, particularly the outer diameter, may be about 1 mm. Thus, the outer diameter is not too large, so that the damage of the optical fiber layer due to bending and/or stretching of the cable may be reduced.

The optical fiber layer may preferably be surrounded by an outer cladding for further improving the signal and/or data transmission of the optical fiber layer. Preferably, the optical fiber layer is sandwiched between the cladding and the outer cladding. The optical fiber layer, cladding and outer cladding can then form an optical waveguide with a pipe cross section.

Advantageously, the signal and/or data bandwidth of the first channel may be different to the signal and/or data bandwidth of the second channel. Hence, an optical cable with an asymmetric signal and/or data bandwidth can be provided. Preferably, the signal and/or data bandwidth of the second channel may be smaller than the bandwidth of the first channel. Hence, the first channel may be capable of transmitting high-speed data and/or signals, such as image output data of an ultra high definition imaging system and the second channel may be adapted to transmit low speed data and/or signals. Therefore, the channels may be optimized for their respective tasks and over-engineering may be further prevented.

The at least one optical fiber may be a single-mode optical fiber, wherein the fiber core diameter is much smaller than the thickness of the cladding. The fiber core diameter may be about 9 µm and the outer diameter of the cladding may be about 125 µm. Single-mode optical fibers have the advantage that even at long distances, i.e. longer than about 100 m, a low signal and/or data loss can be achieved. Furthermore, a high bandwidth can be achieved even at a longer distance.

Alternatively, the at least one optical fiber may be a multi-mode optical fiber, wherein the fiber core diameter is larger than the fiber core diameter of a single-mode optical fiber. The fiber core diameter of the multi-mode optical fiber can be around 50 µm and the outer diameter of the cladding may be about 125 µm. Compared to single-mode optical fibers a lower maximal bandwidth is possible with multi-mode optical fibers. However, multi-mode optical fibers may have its advantages in a simpler and low cost production. Furthermore, the termination of the optical fiber may be easier since the fiber core diameter is larger. In particular, at short distances multi-mode optical fibers can achieve a high bandwidth.

The at least one multi-mode optical fiber can be in a step index configuration. The step index optical fiber may have a refractive index profile characterized by a uniform refractive index within the fiber core and a sharp decrease in refractive index at the fiber core-cladding interface and can be for example made by doping high-purity fused silica glass with different concentrations of materials like titanium, germanium or boron. The manufacturing of a step index multi-mode optical fiber may be easier and may involve fewer costs than a graded index multi-mode optical fiber.

Alternatively, the at least one multi-mode optical fiber can be in a graded index configuration, such as an "OM5" optical fiber. The graded index optical fiber may have a fiber core with a refractive index that decreases with increasing radial distance from the optical axis of the fiber. Hence, the light rays follow a sinusoidal, particularly a parabolic profile. This profile results in continual refocusing of the rays in the fiber core and consequently minimizing modal dispersion. Furthermore, the information carrying capacity may be increased, compared to the step index multi-mode optical fiber.

According to a further aspect not forming a part of the invention, the optical fiber layer and the at least one optical fiber may be rigidly attached to one another, for example the core section may be coated by the optical fiber layer. With the rigid attachment, loose parts may be prevented and the optical fiber layer may serve as a robust shell for the core section.

According to a further aspect of the invention, the optical fiber layer is removably attached to the core section. The optical fiber layer may be formed as a pipe capable of receiving the core section. The core section may be movable essentially parallel to the cable direction relative to the optical fiber layer. In this embodiment, the core section and/or the optical fiber layer may be removed and replaced independently from the other. Thus, if a part gets damaged, the damaged part can be replaced while the other parts may still be intact.

The optical fiber layer may preferably be formed by extrusion.

According to a further aspect of the invention, the inventive optical cable can be used to transmit at least one of a video, image and audio data and/or signal through the first channel. The first channel may preferably have a high-speed signal and/or data transmission, so that in particular an ultra high definition image or video can easily be displayed.

According to another aspect of the invention, the inventive optical cable can be used to transmit a user input signal and/or data through the second channel. The user input may be at least one of an audio, video and touch event. For example, an interface may be controlled by voice, gestures and/or touch, wherein this information is sent through the second channel. The second channel may preferably have a lower speed signal and/or data transmission than the first channel since the user input signals and/or data do not require such a high bandwidth, further reducing the costs of the optical cable, by preventing over-engineering.

In the following, the optical cable according to the invention is explained in greater detail with reference to the accompanying drawings, in which exemplary embodiments are shown.

In the figures, the same reference numerals are used for elements which correspond to one another in terms of their function and/or structure.

According to the description of the various aspects and embodiments, elements shown in the drawings can be omitted if the technical effects of these elements are not needed for a particular application, and *vice versa,* i.e. elements that are not shown or described with reference to the figures but are described above can be added if the technical effect of those particular elements is advantageous in a specific application.

In the figures:
- Fig. 1: shows a schematic drawing of a cable system with an exemplary embodiment of an inventive optical cable; and
- Fig. 2: shows a cross section of the exemplary embodiment of the inventive optical cable.

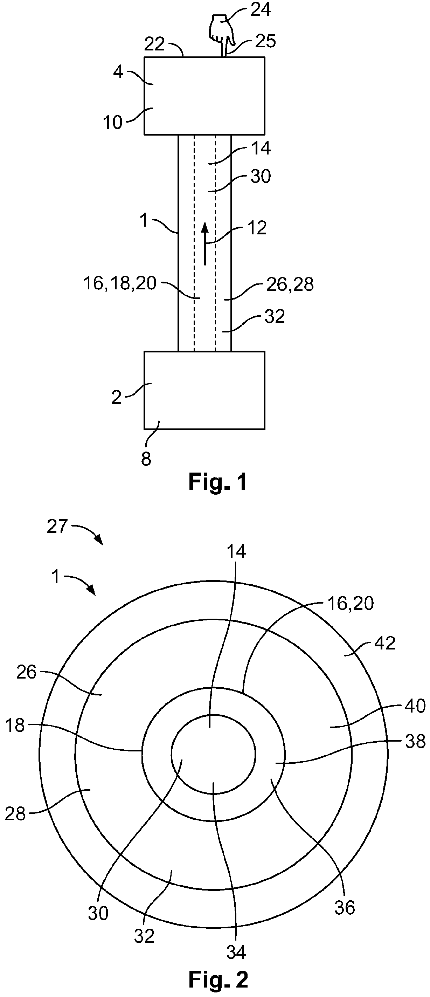

An optical cable 1 according to the invention is shown in Fig. 1, wherein the optical cable 1 connects two units 2, 4. The units 2, 4 and the optical cable 1 form a cable system 6. The unit 2 may be a processing unit 8 for generating data and the unit 4 may be an output unit 10, such as a display and/or speaker system for outputting the data generated by the processing unit 8. Therefore, the optical cable 1 transmits data in a cable direction 12 from the processing unit to the output unit 10 through a first channel 14.

The first channel 14 is formed by at least one optical fiber 16 at a core section 18 of the optical cable 1. In this exemplary embodiment, the core section 18 is formed by a single optical fiber 16. However, in an alternative not shown embodiment, the core section 18 may be formed by a bundle of optical fibers 16. Preferably, the optical fiber 16 is a glass optical fiber 20, which is capable of a high-speed transmission of signals and/or data. Thus, the information can be transmitted from the processing unit 8 to the output unit 10 at a high speed of up to about 40 Gbps.

The output unit 10 may be an interactive unit working as an interface 22, for a user 24 to send commands to the processing unit 8. The interface 22 may be controlled by at least one of a video, audio and touch event. For example, the interface 22 may be a touch sensitive display transmitting information of at least one of position, pressure and motion to the processing unit 8. Additionally or alternatively, the interface 22 may be voice controlled, wherein the user's audio commands are transmitted to the processing unit 8. The bandwidth required to transmit said information to the processing unit 8 is lower than the requirements for transmitting the signals and/or data from the processing unit 8 to the output unit 10.

For transmitting user input 25 to the processing unit 8, a second channel needs to be provided. In known cable systems 6, a separate optical cable 1 may be provided, each forming a single channel. However, this requires a lot of space since a separate connection port has to be provided at the units 2, 4 for each channel, further increasing the size and costs of the cable system 6.

The function and structure of the inventive optical cable 1 is now explained in greater detail with reference to Fig. 2 showing a cross section 27 perpendicular to the cable direction 12 of the inventive optical cable 1.

In order to have an optical cable 1 with a compact and cost efficient design, a second channel 26 is formed by at least one optical fiber layer 28, surrounding the core section 18. Thus, an optical cable 1 with coaxially arranged channels is provided. The connection ports for each channel may also be consequently coaxially arranged, taking up less space than having two separate connection ports.

In this exemplary embodiment, the first channel 14 forms a forward channel 30 and the second channel 26 forms a backward channel 32 transmitting signals and/or data in opposite directions. Therefore, a bidirectional optical cable 1 is produced. The second channel 26 can be designed according to its requirements, independently from the first channel 14, preventing over-engineering of the optical cable 1 and further decreasing the costs of the optical cable 1.

The core section 18 preferably comprises a glass optical fiber 20 with a fiber core 34 and a cladding 36 radially surrounding the fiber core 34. The cladding 36 can further improve the transmission through the fiber core 34. The cladding 36 may comprise multiple layers of different cladding materials and have a lower refractive index as the fiber core 34. The cladding 36 causes light to be confined to the fiber core 34 by total internal reflection at the boundary between the cladding 36 and the fiber core 34. Hence, the light in the first channel 14 is prevented to pass through the cladding 36 and possibly cause an interference in the second channel.

Depending on the application requirements, the optical fiber 16 may be a single mode or multi-mode optical fiber. Single-mode optical fibers have the advantage that even at long distances, i.e. longer than about 100 m, a low signal and/or data loss can be achieved. Furthermore, a high bandwidth can be achieved even at a longer distance. Compared to single-mode optical fibers, a lower maximal bandwidth is possible with multi-mode optical fibers. However, multi-mode optical fibers may have its advantages in a simpler and low cost production.

Furthermore, the termination of the optical fiber may be easier, since the fiber core diameter is larger. In particular, at short distances, multi-mode optical fibers can achieve a high bandwidth.

The second channel 26 is formed by the at least one optical fiber layer 28 that surrounds the core section 18. In this exemplary embodiment, the optical fiber layer 28 is in intimate contact with the cladding 36. Therefore, the cladding 36 also serves as an inner cladding 38 for the second channel 26. The optical fiber layer 28 and the optical fiber 16 may be attached rigidly to one another, preventing any relative movement between these two components. The optical fiber layer 28 and the optical fiber 16 may be bonded adhesively to one another. Alternatively, the optical fiber layer 28 may be a separate part with a pipe shaped cross section, adapted to receive the optical fiber 16. The optical fiber 16 may be movable relatively to the pipe shaped optical fiber layer 28, so that a damaged part can be removed and replaced, without affecting the other part.

The optical fiber layer 28 may preferably comprise a polymer optical fiber 40 such as PMMA. This may be of particular advantage since polymer optical fibers 40 have proven to have a higher straining and bending tolerance than glass optical fibers and are cheaper. Since the transmission speed requirements of the second channel 26 are relatively low compared to the first channel 14 in this exemplary embodiment, the requirements can be satisfied by the polymer optical fiber 40.

An outer cladding 42 may be provided surrounding the optical fiber layer 28, working as an outer boundary for containing the light waves and causing refraction. This further improves the transmission through the optical fiber layer 28. Further components can be provided which are not shown in the figures. For example, a coating may be provided that surrounds the outer cladding, in order to reinforce the optical fiber layer 28 and the fiber core 34. The coating may be a layer of plastic and may adsorb shocks as well as provide extra protection against excessive cable bends. Furthermore, a bundle of strengthening fibers may be provided, helping to protect the optical fiber layer 28 and/or the fiber core 34 against crushing forces and excessive tension during installation. In addition, a cable jacket may be provided, sheathing the other components of the optical cable 1.

With the inventive optical cable 1, a compact and cost efficient design of an optical cable 1 having multiple channels is provided. The bandwidth of each channel can be different, so that each channel can be optimized according to their respective application requirements. Thus, over-engineering of a channel is prevented. With the coaxial arrangement, a single optical cable can be used for different data and/or signal transmissions.

### Reference numerals

- 1: optical cable
- 2: unit
- 4: unit
- 6: cable system
- 8: processing unit
- 10: output unit
- 12: cable direction
- 14: first channel
- 16: optical fiber
- 18: core section
- 20: glass optical fiber
- 22: interface
- 24: user
- 25: user input
- 26: second channel
- 27: cross section
- 28: optical fiber layer
- 30: forward channel
- 32: backward channel
- 34: fiber core
- 36: cladding
- 38: inner cladding
- 40: polymer optical fiber
- 42: outer cladding

## Claims

1. Optical cable (1) comprising a core section (18) with at least one optical fiber (16) extending in a cable direction (12) forming a first channel (14) for transmitting signal and/or data, wherein the core section (18) is surrounded by at least one optical fiber layer (28) forming a second channel (26) for transmitting signal and/or data, the core section (18) and the at least one optical fiber layer being arranged coaxially with one another, **characterized in that** the at least one optical fiber (16) and the at least one optical fiber layer (28) are attached removably to one another.

2. Optical cable (1) according to claim 1, **characterized in that** a cladding (36) is provided between a fiber core (34) of the at least one optical fiber (16) and the at least one optical fiber layer (28).

3. Optical cable (1) according to claim 1 or 2, **characterized in that** the first channel (14) has a different signal and/or data bandwidth than the second channel (26).

4. Optical cable (1) according to claim 3, **characterized in that** the signal and/or data bandwidth of the second channel (26) is lower than the signal and/or data bandwidth of the first channel (14).

5. Optical cable (1) according to any one of claims 1 to 4, **characterized in that** the first channel (14) and the second channel (26) transmit signal and/or data in opposite directions.

6. Optical cable (1) according to any one of claims 1 to 5, **characterized in that** the at least one optical fiber (16) is a glass optical fiber (20).

7. Optical cable (1) according to any one of claims 1 to 6, **characterized in that** the at least one optical fiber comprises a polymer optical fiber (40).

8. Optical cable (1) according to any one of claims 1 to 7, **characterized in that** the at least one optical fiber layer (28) is arranged between an inner cladding (38) and an outer cladding (42).

9. Optical cable (1) according to any one of claims 1 to 8, **characterized in that** the at least one optical fiber (16) is a single mode optical fiber (16).

10. Optical cable (1) according to any one of claims 1 to 8, **characterized in that** the at least one optical fiber (16) is a multi mode optical fiber (16).

11. Use of an optical cable (1) according to any one of claims 1 to 10 for transmitting at least one of a video, image and sound signal and/or data through the first channel (14).

12. Use of an optical cable (1) according to any one of claims 1 to 10 for transmitting a user input signal and/or data through the second channel (26).

13. Method for manufacturing an optical cable (1) comprising the step of surrounding a core section (18) comprising at least one optical fiber (16) extending in a cable direction (12) and forming a first channel (14) for transmitting signal and/or data with at least one optical fiber layer (28) forming a second channel (26) for transmitting signal and/or data, the core section (18) and the at least one optical fiber layer (28) being arranged coaxially with one another, **characterized in that** the at least one optical fiber (16) and the at least one optical fiber layer (28) are attached removably to one another.

## Patentansprüche

1. Optisches Kabel (1), umfassend einen Kernabschnitt (18) mit mindestens einer sich in einer Kabelrichtung (12) erstreckenden Lichtleitfaser (16), die einen ersten Kanal (14) zur Signal- und/oder Datenübertragung bildet, wobei der Kernabschnitt (18) von mindestens einer Lichtleitfaserschicht (28) umgeben ist, die einen zweiten Kanal (26) zur Signal- und/oder Datenübertragung bildet, wobei der Kernabschnitt (18) und die mindestens eine Lichtleitfaserschicht koaxial zueinander angeordnet sind, **dadurch gekennzeichnet, dass** die mindestens eine Lichtleitfaser (16) und die mindestens eine Lichtleitfaserschicht (28) lösbar aneinander befestigt sind.

2. Optisches Kabel (1) nach Anspruch 1, **dadurch gekennzeichnet, dass** zwischen einem Faserkern (34) der mindestens einen optischen Faser (16) und der mindestens einen optischen Faserschicht (28) ein Mantel (36) vorgesehen ist.

3. Optisches Kabel (1) nach Anspruch 1 oder 2, **dadurch gekennzeichnet, dass** der erste Kanal (14) eine andere Signal- und/oder Datenbandbreite aufweist als der zweite Kanal (26).

4. Optisches Kabel (1) nach Anspruch 3, **dadurch gekennzeichnet, dass** die Signal- und/oder Datenbandbreite des zweiten Kanals (26) geringer ist als die Signal- und/oder Datenbandbreite des ersten Kanals (14).

5. Optisches Kabel (1) nach einem der Ansprüche 1 bis 4, **dadurch gekennzeichnet, dass** der erste Kanal (14) und der zweite Kanal (26) Signale und/oder Daten in entgegengesetzten Richtungen übertragen.

6. Optisches Kabel (1) nach einem der Ansprüche 1 bis 5, **dadurch gekennzeichnet, dass** die mindestens eine optische Faser (16) eine optische Glasfaser (20) ist.

7. Optisches Kabel (1) nach einem der Ansprüche 1 bis 6, **dadurch gekennzeichnet, dass** die mindestens eine optische Faser eine optische Polymerfaser (40) umfasst.

8. Optisches Kabel (1) nach einem der Ansprüche 1 bis 7, **dadurch gekennzeichnet, dass** die mindestens eine optische Faserschicht (28) zwischen einem Innenmantel (38) und einem Außenmantel (42) angeordnet ist.

9. Optisches Kabel (1) nach einem der Ansprüche 1 bis 8, **dadurch gekennzeichnet, dass** die mindestens eine optische Faser (16) eine optische Singlemode-Faser (16) ist.

10. Optisches Kabel (1) nach einem der Ansprüche 1 bis 8, **dadurch gekennzeichnet, dass** die mindestens eine optische Faser (16) eine optische Multimode-Faser (16) ist.

11. Verwendung eines optischen Kabels (1) nach einem der Ansprüche 1 bis 10 zur Übertragung von mindestens einem Video-, Bild- und Tonsignal und/oder Daten über den ersten Kanal (14).

12. Verwendung eines optischen Kabels (1) nach einem der Ansprüche 1 bis 10 zum Übertragen eines Benutzereingabesignals und/oder von Daten über den zweiten Kanal (26).

13. Verfahren zur Herstellung eines optischen Kabels (1), das den Schritt umfasst, einen Kernabschnitt (18), der mindestens eine optische Faser (16) umfasst, die sich in einer Kabelrichtung (12) erstreckt und einen ersten Kanal (14) zur Übertragung von Signal und/oder Daten bildet, mit mindestens einer optischen Faserschicht (28) zu umgeben, die einen zweiten Kanal (26) zur Übertragung von Signal und/oder Daten bildet, wobei der Kernabschnitt (18) und die mindestens eine optische Faserschicht (28) koaxial zueinander angeordnet sind, **dadurch gekennzeichnet, dass** die mindestens eine optische Faser (16) und die mindestens eine optische Faserschicht (28) lösbar aneinander befestigt sind.

## Revendications

1. Câble optique (1) comprenant une section d'âme (18) avec au moins une fibre optique (16) s'étendant dans une direction de câble (12) formant un premier canal (14) pour la transmission de signaux et/ou de données, dans lequel la section d'âme (18) est entourée d'au moins une couche de fibre optique (28) formant un second canal (26) pour la transmission de signaux et/ou de données, la section d'âme (18) et l'au moins une couche de fibre optique étant agencées de manière coaxiale l'une par rapport à l'autre, **caractérisé en ce que** l'au moins une fibre optique (16) et l'au moins une couche de fibre optique (28) sont fixées de manière amovible l'une à l'autre.

2. Câble optique (1) selon la revendication 1, **caractérisé en ce qu'une** gaine (36) est prévue entre une âme de fibre (34) de l'au moins une fibre optique (16) et l'au moins une couche de fibre optique (28).

3. Câble optique (1) selon la revendication 1 ou 2, **caractérisé en ce que** le premier canal (14) présente une bande passante de signaux et/ou de données différente de celle du second canal (26).

4. Câble optique (1) selon la revendication 3, **caractérisé en ce que** la bande passante de signaux et/ou de données du second canal (26) est inférieure à la bande passante de signaux et/ou de données du premier canal (14).

5. Câble optique (1) selon l'une quelconque des revendications 1 à 4, **caractérisé en ce que** le premier canal (14) et le second canal (26) transmettent des signaux et/ou des données dans des directions opposées.

6. Câble optique (1) selon l'une quelconque des revendications 1 à 5, **caractérisé en ce que** l'au moins une fibre optique (16) est une fibre optique en verre (20).

7. Câble optique (1) selon l'une quelconque des revendications 1 à 6, **caractérisé en ce que** l'au moins une fibre optique comprend une fibre optique polymère (40).

8. Câble optique (1) selon l'une quelconque des revendications 1 à 7, **caractérisé en ce que** l'au moins une couche de fibre optique (28) est agencée entre une gaine intérieure (38) et une gaine extérieure (42).

9. Câble optique (1) selon l'une quelconque des revendications 1 à 8, **caractérisé en ce que** l'au moins une fibre optique (16) est une fibre optique monomode (16).

10. Câble optique (1) selon l'une quelconque des revendications 1 à 8, **caractérisé en ce que** l'au moins une fibre optique (16) est une fibre optique multimode (16).

11. Utilisation d'un câble optique (1) selon l'une quelconque des revendications 1 à 10 pour transmettre des signaux et/ou données vidéo et/ou image et/ou audio par le premier canal (14).

12. Utilisation d'un câble optique (1) selon l'une quelconque des revendications 1 à 10 pour transmettre des signaux et/ou données d'entrée utilisateur par le second canal (26).

13. Procédé de fabrication d'un câble optique (1) comprenant l'étape consistant à entourer une section d'âme (18) comprenant au moins une fibre optique (16) s'étendant dans une direction de câble (12) et formant un premier canal (14) pour la transmission de signaux et/ou de données avec au moins une couche de fibre optique (28) formant un second canal (26) pour la transmission de signaux et/ou de données, la section d'âme (18) et l'au moins une couche de fibre optique (28) étant agencées de manière coaxiale l'une par rapport à l'autre, **caractérisé en ce que** l'au moins une fibre optique (16) et l'au moins une couche de fibre optique (28) sont fixées de manière amovible l'une à l'autre.
